# EUROPEAN PATENT SPECIFICATION

(11) **EP 1 477 812 B1**
(45) Date of publication and mention of the grant of the patent: **16.07.2008**
(21) Application number: 04011390.4
(22) Date of filing: 13.05.2004
(51) Int. Cl.: G01N 1/40, B01L 3/00, H01J 49/04

(54) **Method and apparatus for processing biological and chemical samples**
Verfahren und Vorrichtung zur Behandlung biologischer und chemischer Proben
Procédé et dispositif pour le traitement d'échantillons biologiques et chimiques

(30) Priority: 13.05.2003 US 469986 P; 13.05.2003 US 470021 P; 23.01.2004 US 538913 P; 01.03.2004 US 548922 P
(43) Date of publication of application: 17.11.2004
(73) Proprietor: Becton Dickinson and Company, Franklin Lakes, New Jersey 07417-1880 (US)
(72) Inventor: Chen, Xiaoxi, Waltham Massachusetts 02451 (US); Shanler, Michael, Bedford Massachusetts 01730 (US)
(74) Representative: Weber, Thomas

(56) References cited:
- WO-A-01/19520
- WO-A-03/012392
- US-A1- 2002 179 520
- US-B1- 6 315 957

## Description

### Field of Invention

This invention relates to methods for processing biological and chemical samples.

### Background of the Invention

Deposition of biological/chemical samples as small spots on a surface of a solid substrate for subsequent analysis or applications is a useful technique in many fields including mass spectrometry and microarray technology. In microarray applications, small quantities of biological/chemical sample solutions, such as antibody solutions, are deposited on a solid substrate to form a high density array of spots. The contents of the sample solutions, such as antibodies, are immobilized on the substrate surface within an area determined by the size of the spots. The ability of depositing a large number of different samples on a surface in a high density array format is a foundation for microarray applications. In fact, deposition of biological/chemical samples as spots on a sample plate is a key sample preparation step in mass spectrometry applications, including MALDI (Matrix-Assisted Laser Desorption Ionization), SELDI (Surface Enhanced Laser Desorption/Ionization) and DIOS (Desorption/Ionization On porous Silicon) mass spectrometry.

Conventional techniques exist for conducting mass spectrometric analysis of large molecules, e.g., using MALDI plates. Typically with these techniques, liquid solutions (including e.g., peptide, protein and energy absorbing matrix) are initially introduced to predefined target sites on a mass spectrometric plate. Since the diameter of the target sites are generally small and often densely packed, small (e.g., 0.5-2 microliter) droplets of the liquid solutions are disposed onto the plate target sites to achieve proper sample placement and to avoid sample overlap between target sites. Once disposed, the liquid samples are evaporated, with matrix crystal conglomerate containing analyte molecules (e.g., peptides and proteins) remaining on the target sites having favorable characteristics for mass spectrometric analysis. Where larger conglomerate samples are desired, serial liquid sample placement and evaporation has been used to iteratively build-up a conglomerate.

Since mass spectrometric plates are generally flat, various techniques have been developed for attracting and/or maintaining the liquid samples at the plate target sites. For example, MALDI plates have been formed with a hydrophobic masking (e.g., polytetrafluoroethylene) over a hydrophilic substrate with the target sites being exposed. In addition, MALDI plates have been formed with etched features which define wells encompassing the target sites with the liquid samples being maintained therein due to surface tension. The approaches are still limited by the small volume (5-10 microliters) of the liquid solutions that can be disposed onto the plate target sites to achieve proper sample placement and to avoid sample overlap between target sites.

Separately, multi-well filter plates with a small chromatography column incorporated at the bottom of each well have been known to be used for sample preparation in mass spectrometry. One typical example of a multi-well filter plate is commercialized under the brand name ZipPlate®. Using the ZipPlate device, the processed samples are pulled through the chromatography columns and directly deposited on a MALDI plate using a vacuum system.

Because the processed samples coming from the wells necessarily travel in the air for a small distance before it reaches the MALDI plate surface, a delicate design is required to ensure that the sample solutions coming out of the neighboring wells do not contaminate each other when being deposited on the plate surface. Also, because air leakage in one well may result in reduced air pressure in other wells, a delicate design is required to ensure that the air pressure applied on each sample is consistent from well to well.

The aforedescribed prior art multi-well plates suffer drawbacks including being formed of rigid plastic (e.g., polystyrene or polypropylene) and failing to have the ability to couple to the MALDI target plate to allow for centrifugation therewith.
WO-A-03/012392 discloses a method for processing chemical and biological liquid samples that are to be collected at collection sites on a target device, said method comprising releasably securing a target support plate to the target device by pressing an elastomeric portion of said target support plate into contact with the target device or by interposing an elastomeric gasket between said target support plate and the target device, said target support plate having spaced-apart top and bottom surfaces, a plurality of columns extending between, and through said top and bottom surfaces, wherein said target support plate is releasably secured to the target device such that said columns at least partially register with the collection sites of the target device; depositing the liquid samples in at least a portion of said columns; evaporating the deposited liquid samples so as to form conglomerates at the collection sites; and releasing the target device from the target support plate with said conglomerates at the collection sites.
US-A-2002/0094533 discloses a method for processing chemical and biological liquid samples that are to be collected at collection sites on a target device, said method comprising securing a target support plate to the target device by pressing an elastomeric portion of said target support plate into contact with the target device or by interposing an elastomeric gasket between said target support plate and the target device, said target support plate having spaced-apart top and bottom surfaces, a plurality of columns extending between, and through, said top and bottom surfaces, wherein said target support plate is secured to the target device such that said columns at least partially register with the collection sites of the target device; depositing the liquid samples in at least a portion of said columns; evaporating the deposited liquid samples so as to form conglomerates at the collection sites.
US-A-2002/179520 discloses to lock a cover and a target plate of a multi-well plate by using protruding locking means.

### Summary of the Invention

The subject invention provides a method for processing chemical and biological liquid samples that are to be collected at collection sites on a target device, said method comprising:
- releasably securing a target support plate to the target device by pressing an elastomeric portion of said target support plate into contact with the target device or by interposing an elastomeric gasket between said target support plate and the target device, said target support plate having spaced-apart top and bottom surfaces, a plurality of columns extending between, and through, said top and bottom surfaces, wherein said target support plate is releasably secured to the target device such that said columns at least partially register with the collection sites of the target device;
- depositing the liquid samples in at least a portion of said columns; and
- evaporating the deposited liquid samples so as to form conglomerates at the collection sites, and
- releasing the target device from the target support plate, characterized in that said target support plate includes a protruding locking member which, at least, partially bounds said target device, and said locking member having an upstanding support member and a transverse member formed such that a portion of the target device may be interposed between an engagement surface defined on the transverse member and said bottom surface to cause releasable securement thereof, and said locking member is deflectable to release said target device.
Advantageously, with the subject invention, a target device (e.g., a multi-well plate, a sample plate for mass spectrometry, a secondary target support plate) can be releasably secured to the target support plate to allow for chemical and biological samples to be prepared therewith. Samples can be efficiently transmitted to a target device having been filtered or processed otherwise without requiring pipetting, or other transference, thereby minimizing cross-contamination.

Various methods can be practiced with the invention described herein, including preparing a sample target plate for mass spectrometry. Furthermore, samples can be filtered and otherwise processed in preparation for analysis.

These and other features of the invention will be better understood through a study of the following detailed description and accompanying drawings.
Preferred embodiments of this invention are apparent from the dependent claims.

### Brief Description of the Drawings

FIGS. 1(a)-1(d) show various column configurations of a target support plate;

FIGS. 2 and 3 show an assembly of a target support plate and a target device;

FIGS. 4 and 5 show a target support plate having a recessed section defined to accommodate a target device;

FIG. 6 shows a cross-section of a target support plate/target device assembly, wherein a mechanical fixation is used to releasably secure the target device to the target support plate;

FIG. 7 is an enlarged view of section 7 from FIG. 6;

FIG. 8 is a partial cross-section of a target support plate/target device assembly wherein, adhesive is used to releasably secure the target device to the target support plate;

FIG. 9 is a partial cross-section of a target support plate/target device assembly wherein an elastomeric gasket is used to releasably secure the target device to the target support plate;

FIG. 10 shows a schematic of a process used to prepare a target device for analysis, wherein the target device is a mass spectrometric plate (e.g., a MALDI plate);

FIG. 11 shows an assembly of a target support plate and a target device, wherein the target support plate includes a filter and filtration media and the target device is a multi-well plate;

FIG. 12 shows an assembly of a first target support plate, having a filter and filtration media disposed therein, a secondary target support plate, and a target device in the form of a mass spectrometric plate (e.g., a MALDI plate) releasably secured to the secondary target support plate;

FIG. 13 shows a schematic of a process for preparing a target device for analysis using the assembly of FIG. 12, wherein the target device is a mass spectrometric plate (e.g., a MALDI plate); and,

FIG. 14 shows a variation of the process of FIG. 13, wherein the sample for analysis may be purified.

### Detailed Description of the Invention

Various configurations of a target support plate are shown and described herein. Advantageously, with the subject invention, a target device (e.g., a multi-well plate, a sample plate for mass spectrometry, a secondary target support plate) is releasably secured to the target support plate to allow for chemical and biological samples to be prepared therewith. Samples can be efficiently transmitted to a target device having been filtered or processed, and may be transmitted without requiring pipetting, or other transference, thereby minimizing cross-contamination.

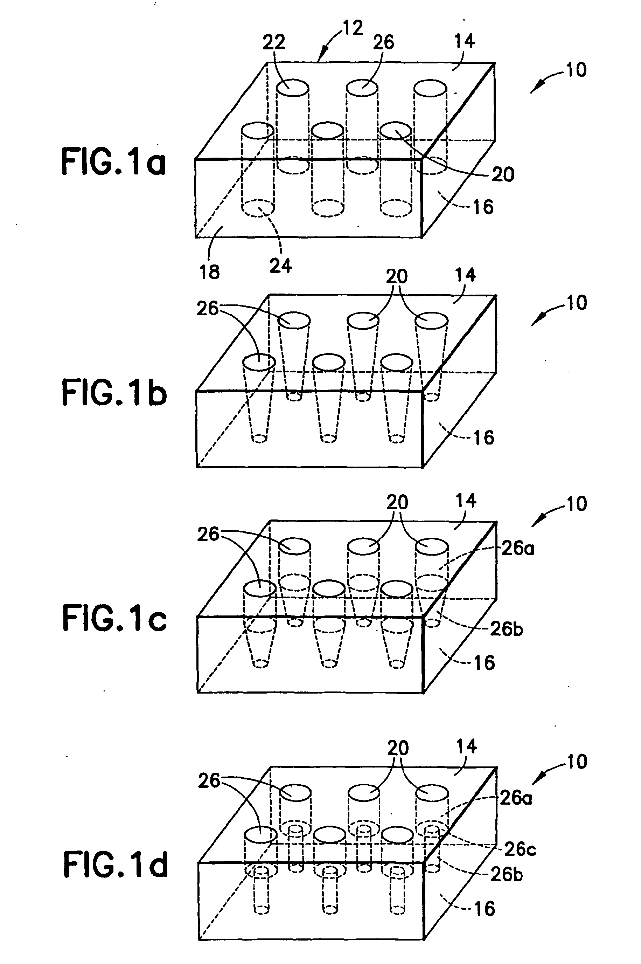

More specifically, and with reference to FIGS. 1(a)-(d), various configurations of a target support plate 10 are shown having a body 12 with top and bottom surfaces 14 and 16, and a plurality of sidewalls 18. One or more columns 20 extend between, and through, the top and bottom surfaces 14 and 16. Consequently, the columns 20 each include an open top end 22, that is coextensive with the top surface 14, and an open bottom end 24, that is coextensive with the bottom surface 16. As is readily appreciated, the columns 20 define open passages completely through the body 12. The body 12 may be formed of any conventional material used to form multi-well plates, such as polypropylene or polystyrene, unless described to the contrary. Preferably, at least a portion of the bottom surface 16 is formed flat. The bottom surface 16, having the open bottom ends 24 formed therethrough, must be configured to provide sufficient surface area for sealing and preventing cross-contamination, as described below (i.e., sufficient surface area is to be provided at intervals between the open bottom ends 24).

Any number of the columns 20 may be utilized. In addition, the columns 20 can be arranged in any pattern in the body 12, including being arranged in known arrays used commonly with multi-well plates (e.g., arrays of 96 columns (12 x 8), 384 columns (16 x 24), 1,536 columns (32 x 48), or other multiples of 12).

Each of the columns 20 includes a column sidewall 26 which may be formed with various geometric configurations. For example, as shown in FIG. 1(a), the column sidewalls 26 may be generally cylindrical. Alternatively, as shown in FIG. 1(b), the column sidewalls 26 may by frusto-conical. Preferably, where a frusto-conical configuration is used, the columns 20 are formed to converge towards the bottom surface **16**. Furthermore, the column sidewalls **26** may be formed with non-constant geometric configurations or of combined geometric configurations, such as in FIG. 1(c), where the column sidewall **26** includes a first column sidewall portion **26a** that is cylindrical and a second column sidewall portion **26b** that is frusto-conical. The first and second column sidewall portions **26a** and **26b** may also be both cylindrical, but of different diameters, such that, as shown in FIG. 1 (d), an annular intermediate surface **26c** is defined at the intersection of the two sidewall portions **26a** and **26b**. The intermediate surface **26c** may provide a support surface for a frit or filter, which in turn may support a filtration media, as further described below. As will be appreciated by those skilled in the art, the column sidewalls **26** may be formed with other configurations.

Depending on the use of the target support plate **10**, the column sidewalls **26** may be treated to enhance the performance of sample preparation, such as, for example, enhancing the detection sensitivity in preparing samples for mass spectrometry. The column sidewalls **26** can be modified to provide reactivity or affinity for certain biological/chemical samples. In another example, the column sidewalls **26** can be modified to minimize non-specific binding of various biological/chemical substances such as proteins/peptides. This approach may aid in avoiding sample loss to the column sidewalls **26.** In yet another example, the column sidewalls **26** can be modified to specifically bind a class of biological/chemical substances such as a particular class of proteins/peptides/nucleotides or a species of small-molecules. This approach is useful where the partial or entire removal of a class of biological/chemical substances from the original liquid sample mixture is desired. In mass spectrometry applications, e.g., MALDI, this approach will be useful where the partial removal of some components will decrease the background of the mass spectrometry and increase the sensitivity of detection for other components.

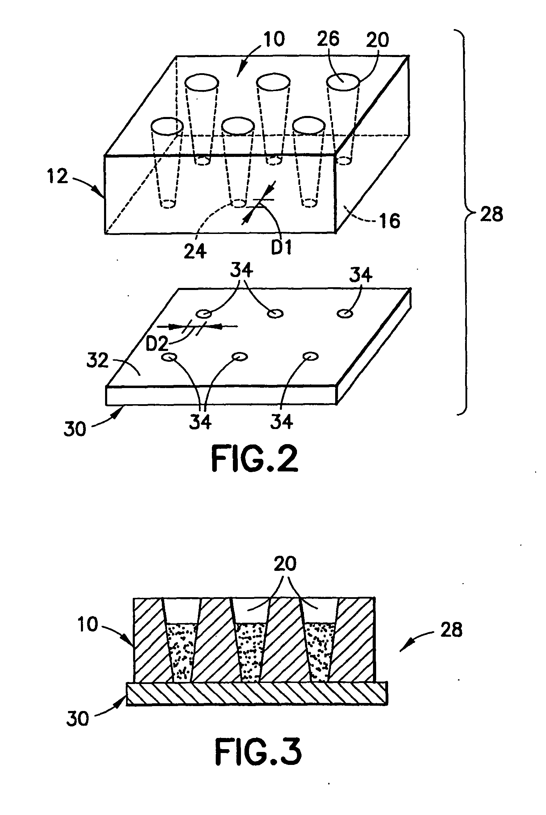

With reference to FIGS. 2 and 3, an assembly **28** may be provided of the target support plate **10** and a target device **30**. The target support plate **10** is formed to be releasably secured to the target device **30.** The target device **30** may be any device for collecting samples, including a multi-well plate, a mass spectrometric plate, or a secondary target support plate.

The target device 30 includes an upper surface 32 which faces the bottom surface 16 of the target support plate 10 with the assembly 28 being assembled. To provide sufficient surface area for sealing, it is preferred that at least a portion of the upper surface 32 be formed flat. In an embodiment not itself representing the present invention at least the bottom surface 16 of the target support plate 10 is formed of an elastomeric material which can be releasably secured to the upper surface 32 of the target device 30. It is preferred that the elastomeric material include a silicon polymer, and more preferably, include poly(dimethyl)siloxane (PDMS). The elastomeric material may also be doped with other polymers to customize its physical properties. With an elastomeric material, van der Waals interactions between the surface molecules of the target support plate 10 and the target device 30 provide for a releasable securement. The target support plate 10 can be pressed onto the target device 30 for securement and removed therefrom by peeling. It is further preferred that the body 12 of the target support plate 10 be wholly formed of the elastomeric material, more preferably being wholly formed of PDMS. The elastomeric and hydrophobic natures of PDMS allow for a tight bond to be formed between the target support plate 10 and the target device 30. With the target support plate 10 being only partially formed of the elastomeric material, remaining portions may be formed of rigid plastic or other material which will impart favorable characteristics to the column sidewalls 26.

The target device 30 includes one or more collection sites 34 for collecting biological and chemical samples that are to be processed as described below. The collection sites 34 may be individual wells of a multi-well plate, target sites on a mass spectrometric plate, or columns of a secondary target support plate. It is preferred that the columns 20 be provided in such quantity and be arranged to preferably register with the collection sites 34 in a one-to-one correspondence, although such correspondence is not required. It is also preferred that the bottom ends **24** of the columns **20** each define a diameter D1 that is equal to, or greater than, the size D2 of the collection sites **34.** In this manner, liquid samples disposed within the columns 20 will cover the respective entireties of the collection sites 34. Where desired, the diameter D 1 can be made less than the size D2.

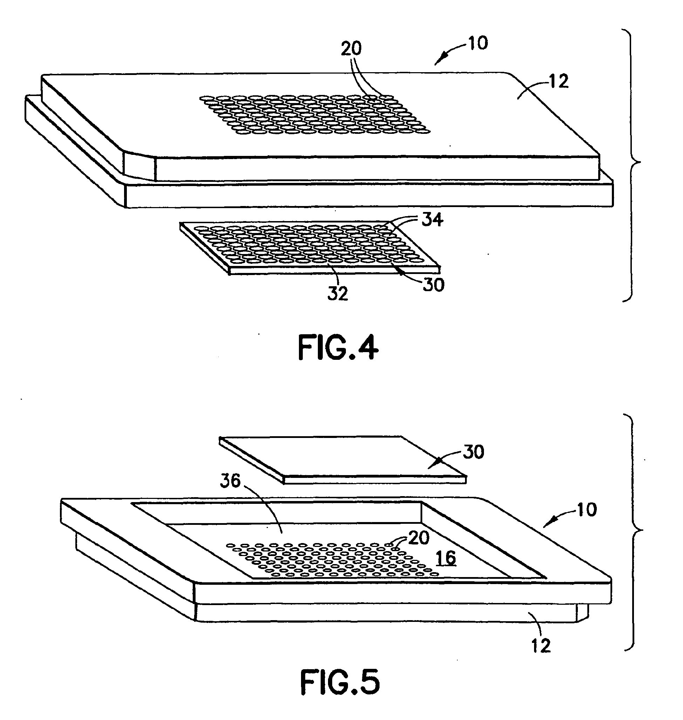

The target support plate 10 can be formed of various sizes and configurations. To allow for the target support plate 10 to be used with common pick-and-place machines and other standard multi-well plate equipment, the target support plate 10 can be formed with the same footprint as a common multi-well plate (e.g., such as the footprint specified in the standards of the Society for Biomolecular Screening (Standards SBS-1 through SBS-5)). In addition, as shown in FIGS. 4 and 5, the target support plate 10 may be formed larger than the target device 30. The bottom surface 16 may be recessed, as best shown in FIG. 5, with a recessed section 36 being defined in which the target device 30 may be wholly accommodated without protruding from the footprint of the body 12.

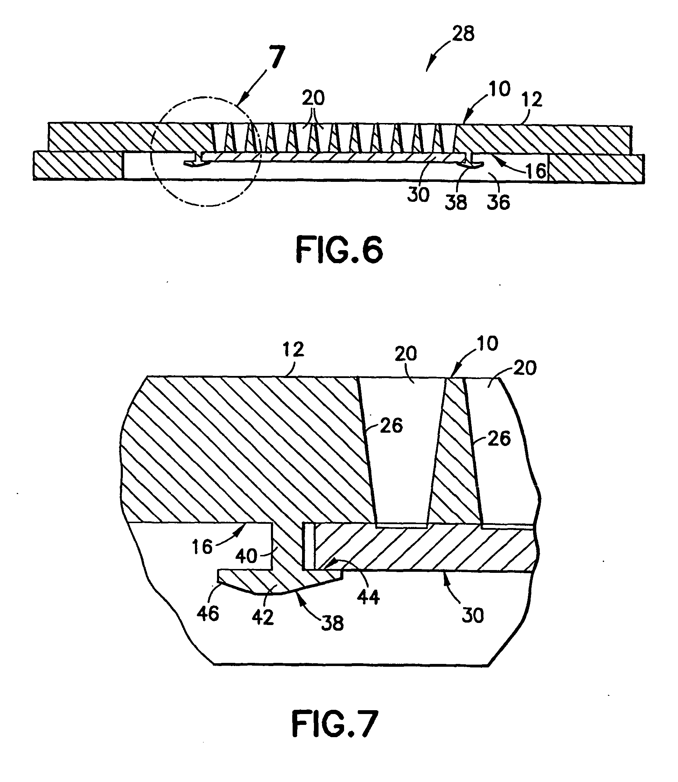

According to the invention the releasable securement between the target support plate 10 and the target device 30, is utilized. With reference to FIGS. 6 and 7, a mechanical fixation used according to the invention is disclosed, wherein a mechanical locking member 38 may be provided which protrudes from the bottom surface 16 to at least partially bound the target device 30. The locking member 38 includes an upstanding support member 40 and a transverse member 42. The upstanding support member 40 and the transverse member 42 are formed such that a portion of the target device 30 is interposed between an engagement surface 44, defined on the transverse member 42, and the bottom surface 16. The transverse member 42 may also include a rearwardly, extending protruding member 46. The target device 30 can be "snapped" into releasable securement with the locking member 38 deflecting and returning to the position shown in FIGS. 6 and 7. Removal of the target device can be achieved by rearward displacement of the protruding member 46 resulting in moment being applied about the upstanding support member 40, deflection of the locking member 38, and separation of the engagement surface 44 from the target device 30. As can be appreciated, the strength of the holding force applied to the target device 30, as well as the difficulty of securement and removal of the target device 30, will be a function of the strength of the locking member 38, and the extent to which the locking member 38 bounds the target device 30.

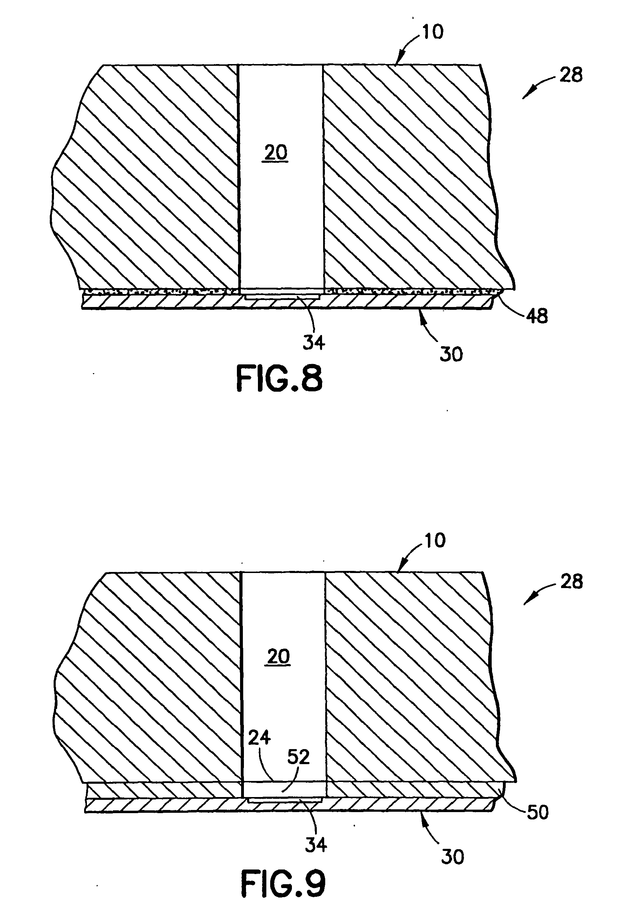

As shown in FIG. 8 in an embodiment not itself representing the present invention, adhesive 48 may be used to releasably secure the target device 30 to the target support plate 10. Any suitable adhesive may be used which will allow for release of the target support plate 10, yet provide sufficient holding force to the target support plate 10 to allow for preparation of the collection sites 34.

As shown in FIG. 9, an elastomeric gasket **50** may be interposed between the target device **30** and the target support plate **10** to provide releasable securement therebetween. In the same manner as described above with the body **12** of the target support plate **10** being formed of an elastomeric material, the elastomeric gasket **50** provides releasable adhesion. This adhesion may be achieved by van der Waals interactions. Preferably, the elastomeric material of the gasket **50** includes silicon polymer, and more preferably, includes poly(dimethyl)siloxane (PDMS). The elastomeric material may also be doped with other polymers to customize its physical properties. It is further preferred that the elastomeric gasket **50** be wholly formed of PDMS. Apertures **52** shall be formed in the gasket **50** as required to expose the intended collections sites **34.** It is preferred that the apertures **52** each have a diameter that is greater than, or equal to, that of the respective open bottom ends **24.**

As will be understood by those skilled in the art, it is desired that sufficient sealing be provided along the interface between the target support plate **10** and the target device **30** to prevent cross-contamination of any liquid samples contained in the columns **20.** The sealing should be at least fluid-tight. In addition, the level of strength of the releasable securement must be considered in view of any processing steps the assembly **28** is to be subjected to. Adhesive and elastomeric sealing will generally provide a weaker holding force than a mechanical fixation and may be used with smaller volume liquid samples and/or lighter target devices; whereas, a mechanical fixation may be used with larger liquid samples and/or heavier target devices. This is particularly so where the assembly **28** is intended to be centrifuged or otherwise transported together with releasable securement being maintained. On the other hand, the target device **30** should be detached without damage thereto. The various forms of releasable securement can be used in varying combinations (for example, adhesive may be used in combination with mechanical fixation).

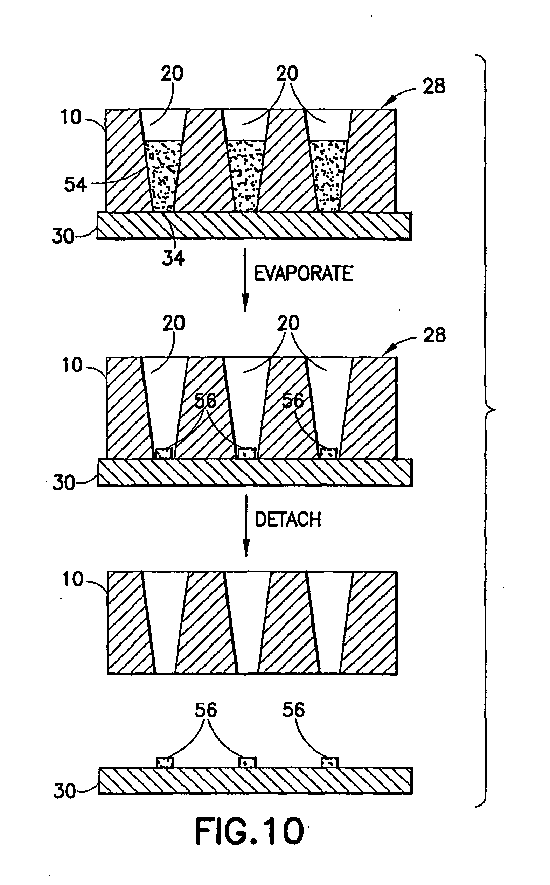

With reference to FIG. 10, an exemplary process is shown therein for preparing a chemical or biological sample for analysis. In particular, the assembly **28** is prepared, wherein the target support plate **10** is releasably secured to the target device **30** using the technique of the present invention. As shown in FIG. 10, the target device **30** may be a mass spectrometric plate, such as a MALDI plate, a SELDI plate, or a DIOS plate. Once the assembly **28** is prepared, liquid samples **54** (which may contain an energy absorbing matrix such as α-cyano-4-hydroxy cinnamic acid, 3, 5-dimethoxy-4-hydroxy cinnamic acid, or 2, 5-dihydroxybenzoic acid) are disposed in the columns **20.** The columns **20** define fluid-collecting wells collectively with the target device **30,** particularly with the collection sites **34** which are in registration with the columns **20**. The liquid samples **54** are caused to evaporate, such as through bench evaporation or evaporative centrifugation. After the liquid is evaporated from the liquid samples **54,** conglomerates **56** are left on the collection sites **34** suitable for further analysis. The target device **30** is released from the target support plate **10** to allow for any such further analysis.

For the preparation of mass spectrometry, the column sidewalls **26** may be pre-coated with matrix molecules and/or mass spectrometry standards that are re-suspended upon addition of the liquid samples **54**. The matrix and/or standards will be found in the conglomerates **56** after evaporation.

Advantageously, the subject invention allows for much larger liquid sample volumes to be used in preparing samples for mass spectrometry analysis, than with prior art techniques. Volumes of the liquid samples **54** may be in the range of 100 to 200 microliters, as opposed to the 1-5 microliters used in the prior art. As such, much greater material concentration in the conglomerate **56** can be achieved than with the prior art. In particular, with reference to the mass balance principle, the product of a first concentration (C1) and a first volume (V1) of a liquid sample equals the product of a second concentration (C2) and a second volume (V2) of the same liquid sample. The liquid samples **54** each have an initial first concentration C1, and an initial first volume V1. Because of evaporation, the resulting volume V2 of the liquid samples **54** is greatly reduced as compared to the initial volume V1. As such, the resulting concentration C2 of the resulting volume V2 is greater than the initial concentration C1, due to the volume reduction Although the subject invention is particularly well-suited for use with a MALDI plate, other target plates, including those not intended for mass spectrometry, may be utilized with the subject invention, such as a glass slide for preparation of multiple isolated samples.

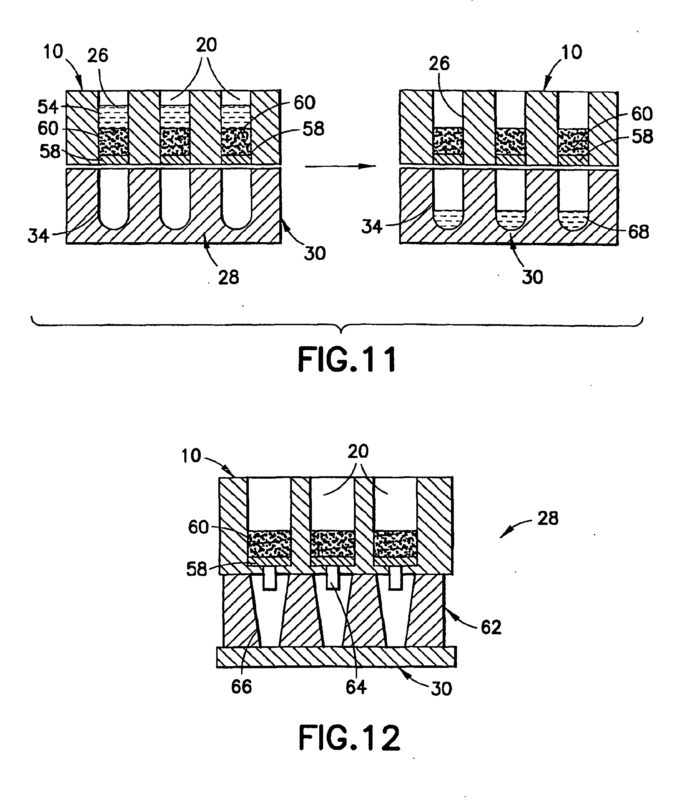

With reference to FIG. 11, the assembly **28** may also be used to allow for liquid sample filtration. The assembly **28** is prepared in any manner described above. FIG. 11 shows the target device **30** as a multi-well plate. Here, at least a portion of the columns **20** of the target support plate **10** are each provided with a frit or filter **58** with filtration media **60,** such as chromatography media (e.g., C18 media), being optionally disposed atop the filter **58**, as is known in the art. The filtration media **60** may be such that it is capable of retaining a particular class of biological/chemical substances (e.g., proteins/peptides/nucleotides) or a species of small-molecules having a certain physical or chemical property. Optionally, the column sidewalls **26** may be modified by attaching ligands thereto to facilitate filtration. Liquid samples **54** that are to be filtered are disposed in the columns **20**, with subsequent centrifuge resulting in the samples **54** being forced through the filtration media **60** and the filter **58** to collect in the collection sites **34** of the target device **30.** Filtered solution **68** can then be transferred for further analysis. Filtering can be desired to remove some components in decreasing the background of the mass spectrometry and increasing the sensitivity for detection for other components. For example, a liquid sample is commonly desalted for the MALDI process. Likewise, depletion of high abundant proteins (e.g., albumin and immunoglobin) in human plasma and human serum may be desired to increase detection sensitivity of low abundant proteins.

With reference to FIG. 12, the assembly **28** can be prepared such that the target support plate **10** is releasably secured to a secondary target support plate **62** which, in turn, is releasably secured to the target device **30,** such as a mass spectrometric plate. As will be appreciated by those skilled in the art, although it is not envisioned that more than two of the target support plates **10** and **62** are to be used together in forming the assembly **28,** the possibility of such an assembly does exist. With the assembly of FIG. 12, the target support plate **10** can be provided with the filter **58** and the filtration media **60** as described above. Exit columns **64** may be optionally provided on the target support plate **10** to channel filtered liquid into secondary collection sites **66** of the secondary target support plate **62.** The secondary collection sites **66** collectively define fluid-collecting wells with the target device **30.**

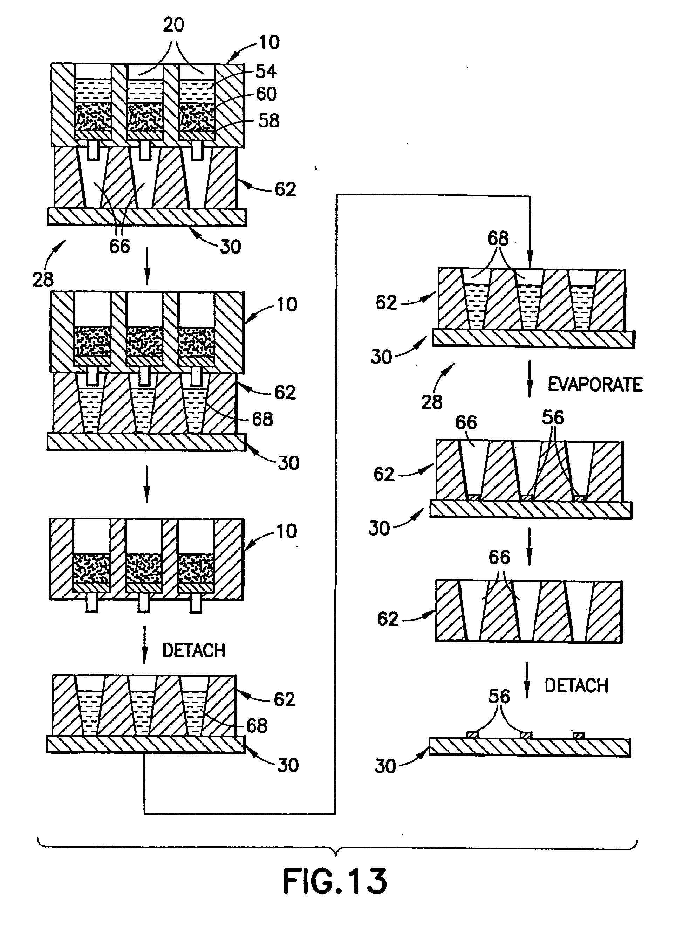

As shown in FIG. 13, the assembly of FIG. 12 can be used to prepare chemical or biological samples for analysis, wherein liquid samples **54** may be initially filtered under centrifuge and collected in the secondary collection sites **66** of the secondary target support plate **62.** Thereafter, the target support plate **10** can be detached from the secondary target support plate **62.** Filtered liquid **68** collected in the secondary collection sites 66 may then be evaporated to form the conglomerates **56** on the collection sites **34** of the target device **30.** Finally, the secondary target support plate **62** may be detached from the target device **30** to allow for analysis of the conglomerates **56.**

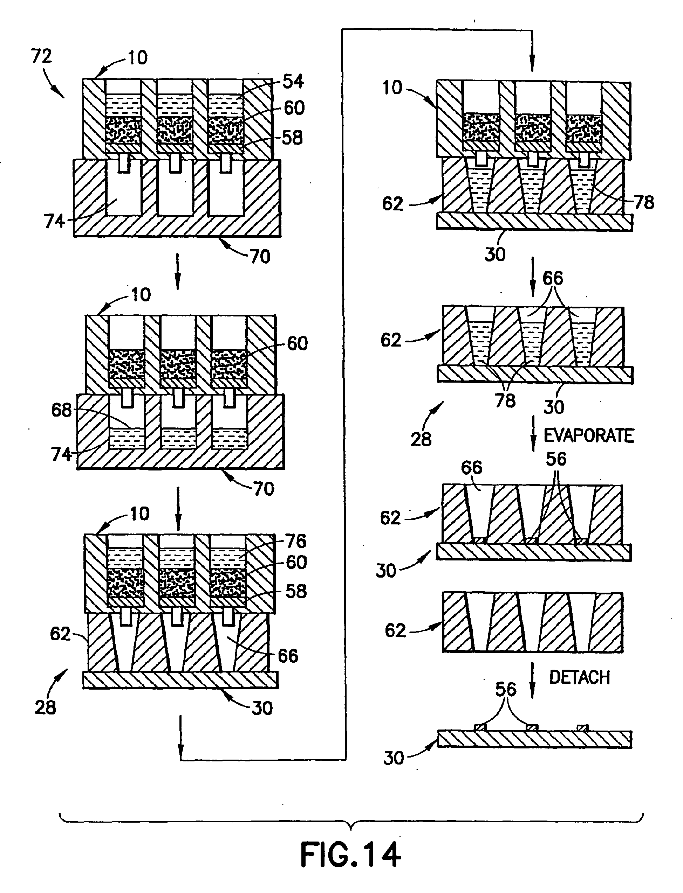

With reference to FIG. 14, and as a variation to the process of FIG. 13, a purification process can be practiced using the subject invention. Initially, the target support plate **10** is releasably secured to a multi-well plate **70** in forming an initial filtering assembly **72** in accordance with any manner described above. Liquid samples **54** are filtered under centrifuge through the filtration media **60** to force waste liquid **68** into collection sites **74** of the multi-well plate **70.** Material of interest is, however, retained in the filtration media **60**. Washing buffers (not shown) can be flowed through the filtration media **60** to disassociate and wash away components that are non-specifically bound in the filtration media **60.** After washing, the target support plate **60** is detached from the multi-well plate **70** and attached to the secondary target support plate **62** in forming the assembly of FIG. 12. Elution buffers **76** (e.g., organic solvents, such as acetonitrile or methanol) are then flowed through the filtration media **60** by centrifuge. The material of interest bound in the filtration media **60** is eluted into the secondary collection sites **66** of the secondary target support plate **62.** The target support plate **10** is thereafter separated from the secondary target support plate **62**. Eluted liquid **78** collected in the secondary target support plate **62** is caused to evaporate leaving conglomerates **56** collected on the collection sites **34** of the target device **30.** To allow for analysis, the secondary target support plate **62** is separated from the target device **30**.

This method is useful when deposition of a purified sample is desired. For example, reverse phase resins, such as C18, may be used to purify protein/peptide samples before deposition as the conglomerates **56.** Other affinity matrices can also be used as the filtration media **60**, such as immobilized metal ion affinity chromatography (IMAC) matrices for phosphorylated peptides/proteins or poly(histidine) fused peptides/proteins, biotin affinity matrices for biotinylated peptide/proteins, and thiol-disulfide exchange chromatography matrices for glutathione S-transferase (GST) fused peptides/proteins.

As will be recognized by those skilled in the art, air and/or liquid-tight seals may be provided on the top surface **14** of the target support plate **10** so that the target support plate **10,** with the target device **30** being supported thereby, may be used for storage and/or assay purposes. Portions of the target support plate **10** can also be prepared for affinity capture or depletion (through coating, a membrane, or preparation of the constituent resin with suitable agents). Ligands and/or proteins may also be deposited in the target support plate **10** prior to introduction of the liquid samples **54**.

The subject invention provides several advantages over the prior art. For example, larger liquid samples can be provided at collection sites, which when evaporated, provide larger mass depositions for analysis. Also, certain organic solvents (e.g., acetone) which have been difficult to use with prior art devices, due to poor containment, can be utilized with the subject invention and properly contained within the columns of the target support plate without leakage. Further, the open bottom ends of the target support plate can be used to define the size of the resulting conglomerates, thereby avoiding inconsistent or improperly-sized formations.

## Claims

1. A method for processing chemical and biological liquid samples (54) that are to be collected at collection sites (34) on a target device (30), said method comprising:
- releasably securing a target support plate (10) to the target device (30) by pressing an elastomeric portion of said target support plate (10) into contact with the target device (30) or by interposing an elastomeric gasket (50) between said target support plate (10) and the target device (30), said target support plate (10) having spaced-apart top and bottom surfaces (14, 16), a plurality of columns (20) extending between, and through, said top and bottom surfaces (14, 16), wherein said target support plate (10) is releasably secured to the target device (30) such that said columns (20) at least partially register with the collection sites (34) of the target device (30);
- depositing the liquid samples (54) in at least a portion of said columns (20); and
- evaporating the deposited liquid samples (54) so as to form conglomerates (56) at the collection sites (34), and
- releasing the target device (30) from the target support plate (10), **characterized in that** said target support plate (10) includes a protruding locking member (38) which, at least, partially bounds said target device (30), and said locking member (38) having an upstanding support member (40) and a transverse member (42) formed such that a portion of the target device (30) may be interposed between an engagement surface (44) defined on the transverse member (42) and said bottom surface (16) to cause releasable securement thereof, and said locking member (38) is deflectable to release said target device (30).

2. A method as in claim 1, wherein the target device (30) is a multi-well plate, preferably a mass spectrometry plate.

3. A method as in claim 1, wherein the target device (30) is a secondary target support plate having spaced-apart top and bottom surfaces, a plurality of columns extending between, and through, said top and bottom surfaces, said columns of said secondary target support plate defining the collection sites (34).

4. A method as in claim 1, wherein said releasably securing includes defining at least fluid-tight seals between said target support plate (10) and the target device (30) at locations between the collection sites (34) so as to prevent cross-contamination between the collection sites (34).

5. A method as in claim 1, wherein said evaporating is bench evaporating or evaporative centrifuging.

6. A method as in claim 1, wherein said target support plate (10) is wholly formed of an elastomeric material.

7. A method as in claims 1 or 6, wherein said elastomeric material includes a silicon polymer, preferably poly(dimethyl)siloxane.

8. A method as in claim 1, wherein at least a portion of said columns (20) is each formed with a cylindrical shape, with a frusto-conical shape, to converge towards said bottom surface (16), and/or with non-constant cross-sections.

9. A method as in claim 1, wherein said bottom surface (16) of said target support plate (10) is recessed.

10. A method as in claim 9, wherein said bottom surface (16) partially defines a recessed section defined within said target support plate (10), said recessed section (36) being defined to accommodate said target device (30) within a footprint of said target support plate (10).

11. A method as in claim 2, wherein said mass spectrometry is for a purpose selected from the group consisting of MALDI (Matrix-Assisted Laser Desorption Ionization) mass spectrometry, SELDI (Surface Enhanced Laser Desorption/Ionization) mass spectrometry, and DIOS (Desorption/Ionization On porous Silicon) mass spectrometry.

12. A method as in claim 1, wherein at least a portion of said columns (20) is each provided with a filter (58), with a filtration media (60), is modified chemically, is modified to provide reactivity for certain biological/chemical molecules, is modified by physical attachment of biological/chemical entities thereto, is modified to minimize non-specific binding of various biological /chemical substances, and/or is modified to specifically bind a class of biological/chemical substances.

## Patentansprüche

1. Verfahren zur Verarbeitung von chemischen und biologischen flüssigen Proben (54), die an Aufnahmestellen (34) auf einer Targetvorrichtung (30) aufzunehmen sind, wobei das Verfahren Folgendes umfasst:
- ein trennbares Befestigen einer Targetträgerplatte (10) an der Targetvorrichtung (30) durch das Pressen eines elastomeren Teils der Targetträgerplatte (10) in Kontakt mit der Targetvorrichtung (30) oder durch das Anordnen einer elastomeren Dichtung (50) zwischen der Targetträgerplatte (10) und der Targetvorrichtung (30), wobei die Targetträgerplatte (10) eine obere und eine untere Fläche (14, 16), die beabstandet sind, eine Mehrzahl von Säulen (20), die sich zwischen der oberen und der unteren Fläche (14, 16) und durch diese hindurch erstrecken, aufweist, wobei die Targetträgerplatte (10) trennbar so an der Targetvorrichtung (30) befestigt ist, dass die Säulen (20) wenigstens teilweise auf die Aufnahmestellen (34) der Targetvorrichtung (30) ausgerichtet sind,
- das Abscheiden der flüssigen Proben (54) in wenigstens einem Teil der Säulen (20) und
- das Verdunsten der abgeschiedenen flüssigen Proben (54), so dass Konglomerate (56) an den Aufnahmestellen (34) gebildet werden, und
- das Lösen der Targetvorrichtung (30) von der Targetträgerplatte (10), **dadurch gekennzeichnet, dass** die Targetträgerplatte (10) ein hervorstehendes Rastelement (38) einschließt, das wenigstens teilweise die Targetvorrichtung (30) begrenzt und wobei das Rastelement (38) ein aufragendes Trägerelement (40) und ein Querelement (42) aufweist, die so ausgebildet sind, dass ein Teil der Targetvorrichtung (30) zwischen einer Angriffsfläche (44), die auf dem Querelement (42) definiert ist, und der Bodenfläche (16) angeordnet werden kann, wodurch eine trennbare Befestigung davon bewirkt wird, und das Rastelement (38) so biegbar ist, dass die Targetvorrichtung (30) freigegeben wird.

2. Verfahren nach Anspruch 1, wobei die Targetvorrichtung (30) eine Mikrotiterplatte, vorzugsweise eine Massenspektrometrie-Platte, ist.

3. Verfahren nach Anspruch 1, wobei die Targetvorrichtung (30) eine Sekundärtarget-Trägerplatte mit einer Ober- und einer Unterseite, die beabstandet sind, einer Mehrzahl von Säulen ist, die sich durch die Ober- und die Unterseite erstrecken, wobei die Säulen der Sekundärtargetplatte die Auffangstellen (34) definieren.

4. Verfahren nach Anspruch 1, wobei das trennbare Befestigen die Definition von wenigstens flüssigkeitdichten Dichtungen zwischen der Targetträgerplatte (10) und der Targetvorrichtung (30) an Orten zwischen den Auffangstellen (34) einschließt, um eine gegenseitige Kontamination zwischen den Auffangstellen (34) zu verhindern.

5. Verfahren nach Anspruch 1, wobei das Verdunsten ein Verdunsten im Labormaßstab oder ein Verdunstungszentrifugieren ist.

6. Verfahren nach Anspruch 1, wobei die Targetträgerplatte (10) vollständig aus einem elastomeren Material besteht.

7. Verfahren nach Anspruch 1 oder 6, wobei das elastomere Material ein Siliciumpolymer, vorzugsweise Poly(dimethyl)siloxan, einschließt.

8. Verfahren nach Anspruch 1, wobei wenigstens ein Teil der Säulen (20) jeweils mit einer zylindrischen Form, mit einer Kegelstumpfform, die in Richtung der unteren Seite (16) konvergiert, und/oder mit nicht konstanten Querschnitten ausgebildet ist.

9. Verfahren nach Anspruch 1, wobei die Unterseite (16) der Targetträgerplatte (10) ausgenommen ist.

10. Verfahren nach Anspruch 9, wobei die Unterseite (16) partiell einen ausgenommenen Abschnitt definiert, der innerhalb der Targetträgerplatte (10) definiert ist, wobei der ausgenommene Abschnitt (36) so definiert ist, dass er die Targetvorrichtung (30) innerhalb einer Grundfläche der Targetträgerplatte (10) aufnimmt.

11. Verfahren nach Anspruch 2, wobei die Massenspektrometrie einem Zweck dient, der ausgewählt ist aus der Gruppe bestehend aus der MALDI- (matrixgestützte Laser-Desorption-Ionisation) Massenspektrometrie, der SELDI- (oberflächenverstärkte Laser-Desorption/Ionisation) Massenspektrometrie und der DIOS- (Desorption/Ionisation auf porösem Silicium) Massenspektrometrie.

12. Verfahren nach Anspruch 1, wobei wenigstens ein Teil der Säulen (20) jeweils mit einem Filter (58), mit einem Filtrationsmedium (60) ausgebildet ist, chemisch modifiziert ist, dahingehend modifiziert ist, dass er eine Reaktivität gegenüber bestimmten biologischen/chemischen Molekülen aufweist, durch eine physikalische Befestigung von biologischen/chemischen Gebilden daran modifiziert ist, dahingehend modifiziert ist, dass er eine nichtspezifische Bindung verschiedener biologischer/chemischer Substanzen minimiert, und/oder dahingehend modifiziert ist, dass er eine Klasse von biologischen/chemischen Substanzen bindet.

## Revendications

1. Procédé de traitement d'échantillons liquides biologiques et chimiques (54) qui doivent être collectés sur des sites de prélèvement (34) sur un dispositif cible (30), ledit procédé comprenant :
la fixation, de façon détachable, d'une plaque de support cible (10) au dispositif cible (30) en appuyant sur une portion élastomère de ladite plaque de support cible (10) pour qu'elle entre en contact avec le dispositif cible (30) ou en intercalant un joint en élastomère (50) entre ladite plaque de support cible (10) et le dispositif cible (30), ladite plaque de support cible (10) ayant des surfaces supérieure et inférieure espacées (14, 16), une pluralité de colonnes (20) s'étendant entre et à travers lesdites surfaces supérieure et inférieure (14, 16), dans lesquelles ladite plaque de support cible (10) est fixée de manière détachable au dispositif cible (30), de sorte que lesdites colonnes (20) se règlent au moins partiellement avec les sites de prélèvement (34) du dispositif cible (30) ;
le dépôt des échantillons liquides (54) dans au moins une portion desdites colonnes (20) ; et
l'évaporation des échantillons liquides déposés (54), de façon à former des conglomérats (56) sur les sites de collecte (34), et
l'enlèvement du dispositif cible (30) de la plaque de support cible (10),
**caractérisé en ce que** ladite plaque de support cible (10) comprend un élément de blocage saillant (38) qui, au moins, se lie partiellement audit dispositif cible (30) et ledit élément de blocage (38) ayant un élément de support vertical (40) et un élément transversal (42), formés de sorte qu'une portion du dispositif cible (30) puisse être interposée entre une surface de prise (44) définie sur l'élément transversal (42) et ladite surface inférieure (16), afin de provoquer la fixation détachable de celle-ci, et ledit élément de blocage (38) peut être défléchi pour enlever ledit dispositif cible (30).

2. Procédé selon la revendication 1, dans lequel le dispositif cible (30) est une plaque multi-puits, de préférence une plaque de spectrométrie en masse.

3. Procédé selon la revendication 1, dans lequel le dispositif cible (30) est une plaque de support cible secondaire, ayant des surfaces supérieure et inférieure espacées, une pluralité de colonnes s'étendant entre, et à travers, lesdites surfaces supérieure et inférieure, lesdites colonnes de ladite plaque de support cible secondaire définissant les sites de prélèvement (34).

4. Procédé selon la revendication 1, dans lequel ladite fixation amovible comprend la définition d'au moins des joints étanches au fluide entre ladite plaque de support cible (10) et le dispositif cible (30) à des endroits situés entre les sites de prélèvement (34), de façon à empêcher une contamination croisée entre les sites de prélèvement (34).

5. Procédé selon la revendication 1, dans lequel ladite évaporation est une évaporation au banc ou une centrifugation évaporative.

6. Procédé selon la revendication 1, dans lequel ladite plaque de support cible (10) est totalement formée en matériau élastomère.

7. Procédé selon les revendications 1 ou 6, dans lequel ledit matériau élastomère comprend un polymère de silicium, de préférence un poly(diméthyl)siloxane.

8. Procédé selon la revendication 1, dans lequel au moins une portion desdites colonnes (20) est chacune façonnée selon une forme cylindrique, avec une forme cylindrico-conique, pour converger vers ladite surface inférieure (16) et/ou avec des sections croisées non constantes.

9. Procédé selon la revendication 1, dans lequel ladite surface inférieure (16) de ladite plaque de support cible (10) est creuse.

10. Procédé selon la revendication 9, dans lequel ladite surface inférieure (16) définit partiellement une portion creuse définie dans ladite plaque de support cible (10), ladite section creuse (36) étant définie de façon à s'adapter audit dispositif cible (30) dans une empreinte de ladite plaque de support cible (10).

11. Procédé selon la revendication 2, dans lequel ladite spectrométrie de masse est dans un but choisi dans le groupe constitué de spectrométrie de masse MALDI (Ionisation de désorption laser assistée par matrice), spectrométrie de masse SELDI (Ionisation/désorption laser augmentée en surface), spectrométrie de masse DIOS (Désorption/lonisation sur silicium poreux).

12. Procédé selon la revendication 1, dans lequel au moins une portion desdites colonnes (20) est chacune dotée d'un filtre (58), avec un support de filtration (60), est modifiée chimiquement, est modifiée pour fournir une réactivité à certaines molécules biologiques/chimiques, est modifiée par fixation physique d'entités biologiques/chimiques à celles-ci, est modifiée pour minimiser la liaison non spécifique de différentes substances biologiques/chimiques, et/ou est modifiée pour lier spécifiquement une classe de substances biologiques/chimiques.
